# DEMANDE DE BREVET EUROPEEN

(11) **EP 4 813 583 A1**
(43) Date de publication de la demande: **30.09.2026**
(21) Numéro de dépôt: 26165541.9
(22) Date de dépôt: 17.03.2026
(51) Int. Cl.: B25J 9/16

(54) **PROCÉDÉ ET SYSTÈME POUR AUGMENTER LA PRÉCISION DU SUIVI D'UNE TRAJECTOIRE PAR UN OUTIL D'UN ROBOT**

(30) Priorité: 26.03.2025 FR 2503096
(71) Demandeur: Airbus SAS, 31700 Blagnac (FR); Airbus Operations SAS, 31060 Toulouse (FR); Airbus Operations GmbH, 21129 Hamburg (DE)
(72) Inventeur: OTTO, Matthias, 21129 Hamburg (DE); MORINIERE, Boris, 17300 Rochefort (FR); BÜRGY, Olivier, 31060 Toulouse (FR)
(74) Mandataire: Gevers & Orès

(57) **Abrégé**

- Procédé et système pour augmenter la précision du suivi d'une trajectoire par un outil d'un robot.
- Le procédé comprend notamment une étape d'acquisition de données, au cours de laquelle le robot (2) exécute la trajectoire souhaitée sans que l'outil (3) réalise la tâche qui lui est assignée et un dispositif de mesure inertielle (10) effectue des mesures inertielles représentatives de petites imprécisions répétables de la trajectoire, ainsi qu'une étape d'opération au cours de laquelle le robot (2) exécute de nouveau la même trajectoire, l'outil (3) réalise la tâche qui lui est assignée, et on commande des actionneurs (9) pour compenser des imprécisions de l'outil (3), en tenant compte du traitement desdites mesures inertielles, réalisé par un dispositif informatique (13), ce qui permet de minimiser de petites imprécisions de trajectoire de faibles amplitudes de l'outil (3), sans avoir à agir sur la trajectoire du robot (2), et ainsi d'augmenter la précision du suivi d'une trajectoire lisse.

## Description

### Domaine technique

La présente invention concerne un procédé et un système pour augmenter la précision du suivi d'une trajectoire par un outil d'un robot.

### Etat de la technique

Les robots industriels, en particulier les manipulateurs à six axes, sont largement utilisés dans l'industrie en raison de leur grande polyvalence, due notamment à leur vaste espace de travail à six degrés de liberté et également à leur rentabilité. Ces robots présentent, toutefois, des imprécisions de trajectoire qui sont répétées et correspondent à des erreurs résiduelles du suivi de trajectoire du robot. En pratique, ces imprécisions répétables se manifestent sous la forme d'oscillations sinusoïdales autour de la trajectoire devant être suivie par un outil du robot.

Même si ces imprécisions répétables sont relativement faibles, elles peuvent affecter la qualité d'une tâche sensible réalisée par l'outil, telle que, par exemple, une impression directe sur forme (ou DTS pour « Direct-to-Shape Printing » en anglais par exemple), qui est une technologie d'impression permettant d'imprimer directement sur la surface tridimensionnelle d'un objet, par exemple d'un avion. Dans ce cas, l'incapacité du robot à suivre parfaitement une trajectoire lisse (à savoir une trajectoire pour laquelle la vitesse et l'accélération sont des fonctions continues du temps) affecte la qualité de l'impression. En particulier, de légères imprécisions de trajectoire de faibles amplitudes (inférieures à 0,2 mm, et plus spécifiquement entre 20 µm et 200 µm) peuvent engendrer des défauts d'impression visibles, altérant ainsi la qualité de l'impression.

On connaît différentes solutions pour réduire des imprécisions de trajectoire. En particulier, on connaît :
- une méthode dite de « trajectoire miroir », selon laquelle on exécute la trajectoire une première fois, on mesure où passe réellement le robot au moyen d'un laser tracker, et on adapte légèrement des points de référence de la trajectoire pour obtenir une trajectoire corrigée que l'on utilise ensuite. Cette méthode est, toutefois, uniquement efficace pour de grandes imprécisions de trajectoire, et pas pour de petites imprécisions de trajectoire (de quelques dizaines de microns) ;
- une méthode qui est utilisée spécialement pour les applications d'impression, selon laquelle, successivement, on imprime une fois sur une pièce une image cible, on scanne la pièce imprimée, on détecte les défauts d'impression, on adapte une référence image pour compenser les erreurs du robot, et on imprime la référence image adaptée sur la pièce finale ;
- une méthode par asservissement visuel. Bien qu'efficace, cette méthode nécessite une référence. Aussi, pour l'impression de bandes successives, elle est bien adaptée aux bandes à imprimer à partir de la seconde bande mais pas à la première bande (pour laquelle il n'existe pas encore de repères imprimés pour l'asservissement).

Aucune de ces solutions usuelles n'est donc complètement satisfaisante pour les applications envisagées.

Ainsi, il existe un besoin de trouver une solution permettant de minimiser les petites imprécisions de trajectoire d'un robot lorsqu'il réalise une tâche sensible sur une trajectoire lisse, tel qu'une impression directe sur forme par exemple.

### Exposé de l'invention

La présente invention a pour objet de proposer une telle solution. Pour ce faire, elle concerne un procédé pour augmenter la précision du suivi d'une trajectoire lisse par un outil d'un robot à articulations multiples.

Selon l'invention, ledit procédé comprend au moins la suite d'étapes suivantes :
- une étape d'acquisition de données, mise en œuvre à l'aide du robot, pour faire exécuter au robot une trajectoire dite robotique permettant à l'outil (en situation non opérationnelle) de suivre une trajectoire lisse donnée, au cours de laquelle des valeurs de paramètres inertiels sont mesurées, à l'aide d'au moins un dispositif de mesure inertielle, et des valeurs de données d'état du robot sont déterminées, les valeurs mesurées des paramètres inertiels et les valeurs déterminées des données d'état étant enregistrées ;
- une étape de traitement de données, mise en œuvre par un dispositif informatique, pour former, à partir des valeurs mesurées et enregistrées des paramètres inertiels et des valeurs déterminées et enregistrées des données d'état ainsi que de la trajectoire lisse donnée, un modèle de prédiction pour prédire des valeurs futures des données d'état du robot ; et
- une étape d'opération, mise en œuvre à l'aide du robot, pour faire exécuter au robot ladite trajectoire robotique, cette seconde étape d'exécution comprenant une sous-étape de commande pour, de façon répétitive, lors de l'exécution de la trajectoire robotique, commander des actionneurs de l'outil pour compenser des erreurs cartésiennes afin d'augmenter la précision du suivi par l'outil (en situation opérationnelle) de ladite trajectoire lisse, lesdites erreurs cartésiennes étant déterminées à partir d'une trajectoire cartésienne prédite, obtenue à partir desdites valeurs futures des données d'état.

Dans le cadre de la présente invention, on entend :
- par situation opérationnelle, la situation dans laquelle l'outil du robot est commandé pour réaliser la tâche qui lui est assignée, c'est-à-dire la tâche qu'il doit réaliser dans l'application considérée ; et
- par situation non opérationnelle, la situation dans laquelle l'outil du robot ne réalise pas la tâche qui lui est assignée.

De plus, dans le cadre de la présente invention, on entend :
- par trajectoire lisse, une trajectoire pour laquelle la vitesse et l'accélération sont des fonctions continues du temps, permettant d'obtenir un déplacement continu et sans à-coups ; et
- par trajectoire robotique, la trajectoire suivie par le robot.

Ainsi, grâce à l'invention, on fait d'abord exécuter au robot (lors de l'étape d'acquisition de données) la trajectoire robotique sans que l'outil réalise la tâche qui lui est assignée, par exemple en gardant ses actionneurs bloqués, et on réalise des mesures inertielles représentatives de petites imprécisions (répétables) de trajectoire, puis lors d'une étape d'opération au cours de laquelle on fait de nouveau exécuter au robot la même trajectoire robotique et au cours de laquelle l'outil réalise la tâche qui lui est assignée, on commande des actionneurs de l'outil pour compenser des imprécisions de trajectoire de l'outil. Ceci permet de minimiser des petites imprécisions de trajectoire (de faibles amplitudes) de l'outil du robot, sans avoir à agir sur la trajectoire (robotique) du robot.

Ce procédé peut être utilisé dans des applications variées. En particulier, il est bien adapté pour minimiser de légères imprécisions de trajectoire existant lors d'une impression directe sur forme.

Dans un premier mode de réalisation préféré, à l'étape d'opération, lors de l'exécution de la trajectoire robotique par le robot, des valeurs de paramètres inertiels sont mesurées et des valeurs de données d'état du robot sont déterminées, les valeurs mesurées des paramètres inertiels et les valeurs déterminées des données d'état étant enregistrées dans une mémoire (tampon), la deuxième étape d'exécution comprenant également au moins les sous-étapes suivantes, mises en œuvre de façon répétitive :
- une sous-étape de prédiction pour prédire, à l'aide dudit modèle de prédiction, des valeurs futures des données d'état sur une fenêtre temporelle future, à partir de valeurs mesurées passées des paramètres inertiels et de valeurs déterminées passées des données d'état, qui sont enregistrées dans la mémoire (tampon) ;
- une première sous-étape de calcul pour calculer, à partir des valeurs futures prédites des données d'état, la trajectoire cartésienne prédite que le robot exécutera sur la fenêtre temporelle future ; et
- une seconde sous-étape de calcul pour calculer dans un référentiel de référence de l'outil lesdites erreurs cartésiennes de ladite trajectoire cartésienne prédite par rapport à la trajectoire lisse donnée, les actionneurs de l'outil étant commandées (à la sous-étape de commande) pour compenser ces erreurs cartésiennes.

De plus, avantageusement, la deuxième étape d'exécution comprend également une sous-étape d'extraction pour extraire de la mémoire (tampon) les valeurs mesurées passées des paramètres inertiels et les valeurs déterminées passées des données d'état, qui seront utilisées dans la sous-étape de prédiction.

En outre, dans un second mode de réalisation simplifié, au moins la trajectoire cartésienne prédite est formée à l'étape de traitement de données.

Par ailleurs, de façon avantageuse, le modèle de prédiction formée à l'étape de traitement de données se base sur l'un des éléments suivants : une régression, un réseau neuronal.

En outre, avantageusement :
- les paramètres inertiels comprennent au moins certains des paramètres suivants : une ou des accélérations linéaires, une ou des vitesses angulaires ; et/ou
- les données d'état comprennent au moins certaines des données suivantes du robot : une ou des positions d'articulations, une ou des vitesses d'articulations, une ou des positions cartésiennes, une ou des vitesses cartésiennes.

Par ailleurs, de façon avantageuse, le procédé comporte également une étape de programmation pour programmer le robot afin qu'il exécute ladite trajectoire robotique pour que l'outil suive la trajectoire lisse.

La présente invention concerne également un système pour augmenter la précision du suivi d'une trajectoire lisse par un outil d'un robot.

Selon l'invention, le système comporte au moins :
- ledit robot qui est commandé pour exécuter une trajectoire dite robotique permettant à l'outil de suivre une trajectoire lisse donnée, le robot étant commandé pour exécuter une trajectoire robotique, à la fois pour une situation non opérationnelle et pour une situation opérationnelle de l'outil ;
- au moins un dispositif de mesure inertielle configuré pour mesurer les valeurs de paramètres inertiels au cours de l'exécution de la trajectoire robotique par le robot, au moins pour ladite situation non opérationnelle de l'outil ;
- au moins une mémoire configurée pour enregistrer les valeurs des paramètres inertiels, mesurées par le dispositif de mesure inertielle, et des valeurs déterminées de données d'état du robot ;
- un dispositif informatique configuré au moins pour former, à partir des valeurs mesurées et enregistrées des paramètres inertiels et des valeurs déterminées et enregistrées des données d'état ainsi que de la trajectoire lisse donnée, un modèle de prédiction pour prédire des valeurs futures des données d'état du robot ; et
- des actionneurs de l'outil configurés pour compenser, au cours de l'exécution de la trajectoire robotique pour la situation opérationnelle de l'outil, des erreurs cartésiennes afin d'augmenter la précision du suivi par l'outil de ladite trajectoire lisse, lesdites erreurs cartésiennes étant déterminées à partir d'une trajectoire cartésienne prédite, obtenue à partir desdites valeurs futures des données d'état.

### Brève description des figures

Les figures annexées feront bien comprendre comment l'invention peut être réalisée. Sur ces figures, des références identiques désignent des éléments semblables.
La figure 1 est le schéma synoptique d'un procédé pour augmenter la précision du suivi d'une trajectoire lisse par un outil d'un robot.
La figure 2 montre schématiquement un système configuré pour mettre en œuvre le procédé de la figure 1.
La figure 3 illustre schématiquement un exemple d'un robot susceptible de faire partie du système de la figure 2.

### Description détaillée

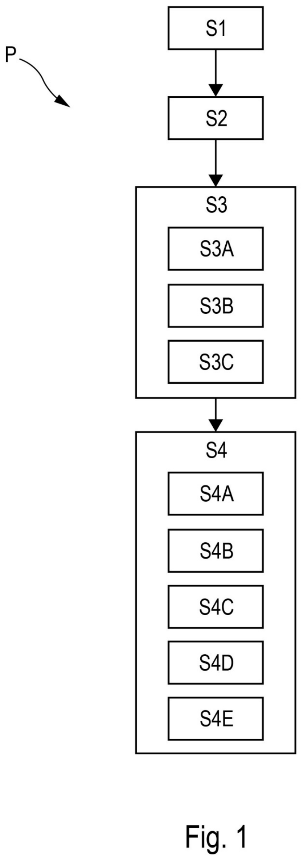

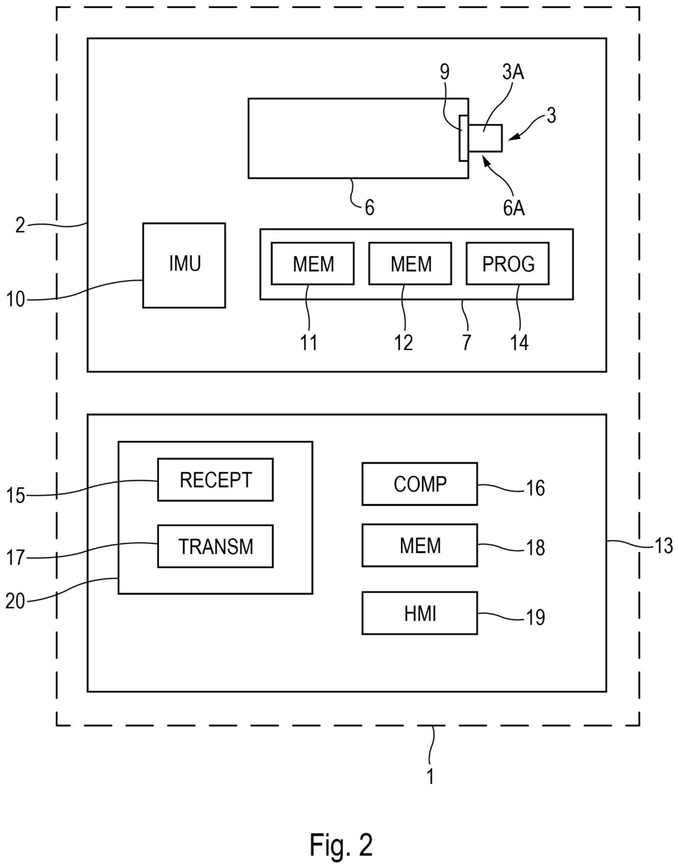

Dans le cadre de la présente invention, un procédé P (par exemple tel que celui représenté dans un mode de réalisation particulier sur la figure 1) qui est susceptible d'être mis en œuvre par un système 1 (par exemple tel que celui représenté dans un mode de réalisation particulier sur la figure 2), est destiné à augmenter la précision d'une trajectoire lisse suivie par un outil 3 d'un robot 2 à articulations multiples, de type étagé.

Le robot 2 à articulations multiples comprend une pluralité d'articulations (comme précisé ci-dessous) ainsi qu'un outil 3 (ou effecteur), c'est-à-dire une partie du robot 2 qui est généralement localisée à une extrémité du robot 2 et qui est destinée à interagir directement avec son environnement pour accomplir une tâche spécifique. L'outil 3 présente ainsi des mobilités (générées par des actionneurs) redondantes à celles du robot 2 qui porte l'outil 3.

Les axes du robot 2 (par exemple au nombre de six) permettent des déplacements importants (nécessaires pour atteindre la portée souhaitée) mais ils génèrent des erreurs de trajectoire, tandis que les axes de l'outil 3 (porté par le robot 2 et donc soumis aux déplacements du robot 2) présentent une portée réduite, mais une grande précision. Le robot 2 est ainsi de type étagé.

Le système 1 peut être appliqué à des robots 2 à articulations multiples susceptibles d'être utilisés dans des applications variées, plus particulièrement dans le domaine industriel, pour lesquelles on cherche à contrôler avec précision la trajectoire (lisse) suivie par l'outil 3 du robot 2.

A titre d'illustration, le robot 2 peut être utilisé pour mettre en œuvre une impression directe sur forme de type DTS (« Direct-to-Shape Printing » en anglais), qui est une technologie d'impression permettant d'imprimer directement sur la surface tridimensionnelle d'un objet, quelle que soit sa forme ou sa texture, par exemple sur le fuselage d'un avion. Dans ce cas, le robot 2 comprend à une extrémité libre, comme outil 3, un outil d'impression (« printing end-effector » en anglais) pourvu d'une pluralité de têtes d'impression.

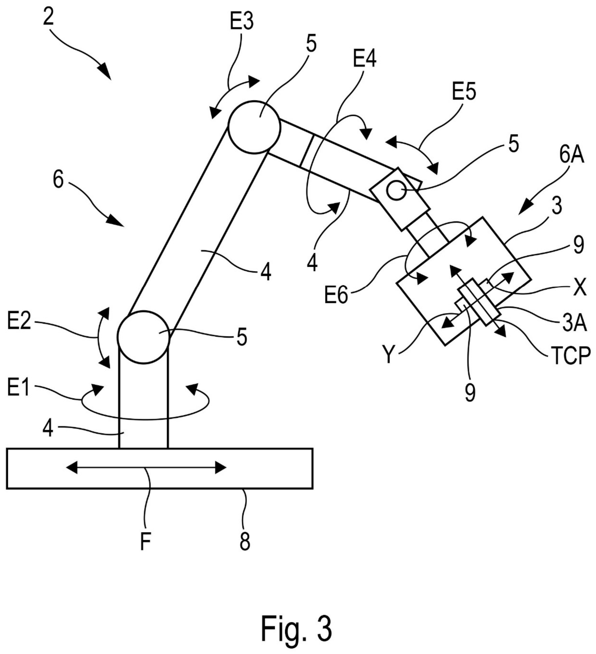

Le robot 2 peut être configuré pour réaliser tout type de mouvement (mouvement linéaire, mouvement rotatif, articulation complexe, ...). Pour ce faire, il comporte, de façon usuelle, un ensemble mécanique 6 pourvu, notamment, de segments 4 (ou bras) articulés au niveau d'articulations 5, comme représenté à titre d'illustration sur la figure 3. Chaque articulation 5 peut être commandée, de façon usuelle, par un moteur (électrique, hydraulique ou pneumatique) non représenté.

Le robot 2 comprend également comme représenté sur la figure 2, une unité de commande 7 destinée, notamment, à commander les mouvements du robot 2, ainsi que généralement les tâches réalisées par l'outil 3 du robot 2.

Le robot 2 représenté à titre d'illustration sur la figure 3 comporte une base 8 susceptible d'être déplacée comme illustré par une double flèche F et des segments 4 articulés au niveau des articulations 5. Ce robot 2 peut effectuer des mouvements illustrés par des doubles flèches E1, E2, E3, E4, E5 et E6. Le robot 2 est pourvu d'un outil 3 à une extrémité libre 6A de l'ensemble mécanique 6. Cet outil 3 est muni d'actionneurs 9 susceptibles de déplacer au moins une partie 3A de l'outil 3 dans le sens illustré par des doubles flèches X et Y (figure 3).

Sur la figure 3, on a également représenté un point TCP (pour «Tool Center Point » en anglais) qui correspond à un point de référence de la partie 3A de l'outil 3, qui réalise la tâche assignée à l'outil 3, ce point de référence devant suivre une trajectoire lisse précise.

Le robot 2 comprend ainsi :
- l'ensemble mécanique 6, par exemple à six axes, qui apporte une grande amplitude de mouvement (par exemple six degrés de liberté) mais généralement une précision présentant des limites ; et
- des actionneurs 9 de l'outil 3, susceptibles d'apporter une mobilité (localisée) supplémentaire, pour positionner le point TCP plus précisément par rapport à l'ensemble mécanique 6, comme précisé ci-dessous.

Les robots industriels tels que le robot 2 présentent généralement des imprécisions de trajectoire qui sont répétables. En pratique, ces imprécisions répétables peuvent prendre la forme d'une somme d'oscillations sinusoïdales autour de la trajectoire considérée, dans toutes les dimensions. Ces imprécisions sont répétables lorsque la même trajectoire robotique (même point de départ, même point d'arrivée, même tracé) est suivie par le même robot à la même vitesse, avec la même charge utile. Par exemple, lorsque l'on programme un robot à six axes pour que l'outil suive une trajectoire parfaitement linéaire par rapport à une surface plane fixe, on peut généralement observer sur la trajectoire réellement suivie par le robot, une variation de la direction avant correspondant à des variations de vitesse et/ou une variation de la direction transversale correspondant à des erreurs résiduelles de suivi le long du parcours et/ou une variation de l'orientation de l'outil.

Ces imprécisions répétables présentent typiquement les caractéristiques suivantes, notamment dans le cas d'une impression directe sur forme :
- une amplitude de ± 300 µm ;
- une plage de fréquences de 2 à 10 Hz ;
- une accélération de ± 10 mm/s² ; et
- une vitesse de rotation de ± 0,5°/s.

Même si ces imprécisions répétables sont relativement faibles, elles peuvent affecter la qualité de la tâche effectuée par l'outil 3 du robot 2. Par exemple, pour un impression directe sur forme, des imprécisions de trajectoire de faibles amplitudes (inférieures ou égales à 0,2 mm, et surtout comprises entre 20 µm et 200 µm) induisent des défauts d'impression visibles qui altèrent la qualité de l'impression, tels qu'une marbrure des couleurs, un effet grain de bois, un désalignement des couleurs et/ou une introduction de petites lignes blanches sur des couleurs plates.

Le système 1 a pour but, notamment, de réduire de telles imprécisions de trajectoire de l'outil 3 du robot 2 effectuant une tâche (par exemple une impression directe sur forme) le long d'une trajectoire lisse.

Pour ce faire, le système 1 comporte notamment, comme représenté sur la figure 2 :
- ledit robot 2 qui est commandé pour exécuter une trajectoire robotique T1 permettant à l'outil 3 de suivre une trajectoire lisse T2 donnée, le robot 2 étant commandé pour exécuter la trajectoire robotique T1 lors d'une étape d'acquisition de données S2 et lors d'une étape opérationnelle S4, précisées ci-dessous ;
- au moins un dispositif de mesure inertielle 10, par exemple une unité de mesure inertielle de type IMU (pour « Inertial Measurement Unit » en anglais), qui est monté sur le robot 2 et qui est configuré pour mesurer les valeurs de paramètres inertiels au cours de l'exécution de la trajectoire robotique T1 par le robot 2, au moins lors de l'étape d'acquisition de données S2. Le ou les dispositifs de mesure inertielle 10 peuvent être montés sur des segments 4 du robot 2 et également sur l'outil 3 ;
- au moins une mémoire 11, 12 (MEM pour « Memory » en anglais), qui est intégrée par exemple dans l'unité de commande 7 du robot 2 ou dans une unité de traitement (non représentée) du dispositif de mesure inertielle 10, pour enregistrer les valeurs de paramètres inertiels mesurées par le dispositif de mesure inertielle 10, et des valeurs de données d'état du robot 2 ;
- un dispositif informatique 13 configuré au moins pour former, à partir des valeurs mesurées et enregistrées des paramètres inertiels et des valeurs enregistrées des données d'état ainsi que de la trajectoire lisse T2 donnée, un modèle de prédiction pour prédire des valeurs futures des données d'état du robot 2 ; et
- les actionneurs 9 de l'outil 3, configurés pour compenser, au cours de l'exécution de la trajectoire robotique T1 lors de l'étape opérationnelle S4, des erreurs cartésiennes afin de permettre à l'outil 3 de suivre ladite trajectoire lisse T2 avec une plus grande précision, lesdites erreurs cartésiennes étant déterminées à partir d'une trajectoire cartésienne prédite (obtenue à partir desdites valeurs futures des données d'état).

Le procédé P mis en œuvre par le système 1 a donc pour objet d'augmenter la précision du suivi par l'outil 3 du robot 2 de la trajectoire lisse T2 devant être suivie.

Pour ce faire, ledit procédé P comprend, comme représenté sur la figure 1, notamment les étapes suivantes, mises en œuvre par le système 1 :
- une étape de programmation S1, mise en œuvre à l'aide d'une unité de programmation 14 (PROG pour « programming unit » en anglais) intégrée dans l'unité de commande 7 du robot 2 (figure 2), pour programmer le robot 2 afin qu'il exécute la trajectoire robotique T1 pour que l'outil 3 suive la trajectoire lisse T2 ;
- une étape d'acquisition de données (ou première étape d'exécution) S2, mise en œuvre à l'aide du robot 2, pour faire exécuter au robot 2 la trajectoire robotique T1 telle que programmée, permettant ainsi à l'outil 3 (en situation non opérationnelle) de suivre la trajectoire lisse T2 donnée. Au cours de cette exécution de la trajectoire robotique T1 par le robot 2, de façon répétitive, à chaque pas de temps considéré (par exemple à une fréquence de 250 Hz), des valeurs de paramètres inertiels sont mesurées, à l'aide du dispositif de mesure inertielle 10, et des valeurs de données d'état du robot 2 sont déterminées de façon usuelle. Les valeurs mesurées des paramètres inertiels et les valeurs déterminées des données d'état sont enregistrées, par exemple dans la mémoire 11 ;
- une étape de traitement de données S3, mise en œuvre par le dispositif informatique 13, pour former, à partir des valeurs mesurées et enregistrées des paramètres inertiels et des valeurs déterminées et enregistrées des données d'état ainsi que de la trajectoire lisse donnée T2, un modèle de prédiction (de séries temporelles) pour prédire des valeurs futures des données d'état du robot 2 ; et
- une étape d'opération (ou seconde étape d'exécution) S4, mise en œuvre à l'aide du robot 2, pour faire exécuter de nouveau au robot 2 la trajectoire robotique T1. Cette étape d'opération S4 comprend une sous-étape de commande S4E pour, de façon répétitive à chaque pas de temps considéré (par exemple à une fréquence supérieure à 100 Hz), lors de l'exécution de la trajectoire robotique T1, commander les actionneurs 9 (locaux) de l'outil 3 pour compenser des erreurs cartésiennes afin de permettre à l'outil 3 (en situation opérationnelle) de suivre la trajectoire lisse T2 avec une plus grande précision. Les erreurs cartésiennes sont déterminées à partir d'une trajectoire cartésienne prédite, obtenue à partir desdites valeurs futures des données d'état, comme indiqué ci-dessous.

Dans le cadre de la présente invention, on entend :
- par situation opérationnelle, la situation dans laquelle l'outil 3 du robot 2 est commandé, par exemple à l'aide de l'unité de commande 7, pour réaliser la tâche qui lui est assignée, c'est-à-dire la tâche qu'il doit réaliser dans l'application considérée. A titre d'exemple, dans le cadre d'une impression directe sur forme, telle que décrite ci-dessus, l'outil d'impression réalise une impression ; et
- par situation non opérationnelle, la situation dans laquelle l'outil 3 du robot 2 ne réalise pas la tâche qui lui est assignée. Par exemple, dans le cadre d'une impression directe sur forme, l'outil d'impression ne réalise pas d'impression.

On décrit, à présent, plus en détail les différentes étapes du procédé P.

A l'étape de programmation S1, un opérateur programme de façon usuelle le robot 2, à l'aide de l'unité de programmation 14 (figure 2), pour qu'il exécute la trajectoire robotique T1 afin que l'outil 3 suive la trajectoire lisse T2 souhaitée.

Dans le cadre de la présente invention, on entend par trajectoire lisse, une trajectoire T2 combinant les trois critères suivants :
- la fonction décrivant la trajectoire, par exemple à six degrés de liberté (trois translations, trois rotations), est différentiable au moins trois fois par rapport au temps ;
- l'accélération instantanée est négligeable par rapport à la gravité ; et
- l'accélération centripète induite par une courbure de la trajectoire (et une vitesse de déplacement donnée) est négligeable par rapport à la gravité. On entend par négligeable, une accélération faible par rapport à la gravité.

Ensuite, à l'étape d'acquisition de données S2, le robot 2 est commandé (de façon usuelle), notamment par l'unité de commande 7, pour exécuter la trajectoire robotique T1, permettant à l'outil 3 de suivre la trajectoire lisse T2 donnée. Dans cette étape d'acquisition de données S2, l'outil 3 est dans une situation non opérationnelle et ne réalise donc pas la tâche qui lui est assignée.

Au cours de cette exécution de la trajectoire robotique T1 par le robot 2, le dispositif de mesure inertielle 10 mesure des valeurs de paramètres inertiels, à savoir les valeurs d'une ou de plusieurs accélérations linéaires et/ou les valeurs d'une ou de plusieurs vitesses angulaires de l'outil 3.

De plus, au cours de cette exécution de la trajectoire robotique T1, des valeurs de données d'état du robot 2 sont déterminées de façon usuelle. Les données d'état comprennent au moins certaines des données suivantes du robot 2 :
- une ou des positions des articulations 5 (figure 3) de l'ensemble mécanique 6 du robot 2, exprimées par exemple en valeurs d'angles dans les directions de rotations illustrées par les doubles flèches E1 à E6 sur la figure 3 ;
- une ou des vitesses d'articulations, correspondant à chaque fois à la vitesse à laquelle l'articulation 5 considérée se déplace ;
- une ou des positions cartésiennes qui représentent la ou les positions de l'outil dans un repère cartésien dans l'espace ; et
- une ou des vitesses cartésiennes qui représentent la ou les vitesses de déplacement de l'outil dans le repère cartésien.

Les valeurs mesurées des paramètres inertiels et les valeurs déterminées des données d'état sont enregistrées dans la mémoire 11.

Le système 1 utilise un modèle cinématique direct, usuel, qui permet d'exprimer la position et l'orientation de l'outil 3 en fonction de données (positions, vitesses) relatives aux articulations 5 du robot 2.

L'étape de traitement de données S3 qui suit, comprend :
- une sous-étape de réception S3A, mise en œuvre par une unité de réception 15 (RECEPT pour « reception unit » en anglais) du dispositif informatique 13 (figure 2), pour recevoir au moins les valeurs mesurées des paramètres inertiels et les valeurs déterminées des données d'état qui ont été enregistrées dans la mémoire 11. Le dispositif informatique 13 peut recevoir ces données, par exemple à l'aide d'un fichier qui est chargé dans le dispositif informatique 13 ou via une transmission de données entre l'unité de commande 7 du robot 2 et l'unité de réception 15 du dispositif informatique 13 ;
- une sous-étape de calcul S3B, mise en œuvre par une unité de calcul 16 (COMP pour « computing unit » en anglais) du dispositif informatique 13, pour former, à partir des valeurs mesurées et enregistrées des paramètres inertiels et des valeurs déterminées et enregistrées des données d'état ainsi que de la trajectoire lisse T2 donnée, un modèle de prédiction (de séries temporelles) pour prédire des valeurs futures des données d'état du robot 2 ; et
- une sous-étape de transmission S3C, mise en œuvre par une unité de transmission 17 (TRANSM pour « transmission unit » en anglais) du dispositif informatique 13, pour transmettre le modèle de prédiction (de séries temporelles) ou les valeurs futures des données d'état du robot 2, à l'unité de commande 7 du robot 2.

A la sous-étape de calcul S3B, l'unité de calcul 16 peut utiliser différents types de modèles usuels pour obtenir un modèle (de prédiction) paramétrique, et en particulier une régression ou un réseau neuronal pré-entraîné.

A l'étape d'opération S4 qui suit, on fait de nouveau exécuter au robot 2 la même trajectoire robotique T1 (qui est programmée). Lors de cette étape d'opération S4, à la différence de l'étape d'acquisition de données S2, l'outil 3 du robot 2 est dans une situation opérationnelle et est commandé, par exemple à l'aide de l'unité de commande 7, pour réaliser la tâche qui lui est assignée.

Cette étape d'opération S4 comprend une sous-étape de commande S4E pour, de façon répétitive, à chaque pas de temps considéré (par exemple à une fréquence supérieure à 100 Hz), lors de l'exécution de la trajectoire robotique T1, commander les actionneurs 9 de l'outil 3 pour compenser des erreurs cartésiennes afin de permettre à l'outil 3 de suivre la trajectoire lisse T2 avec une plus grande précision.

Dans un premier mode de réalisation (préféré), à l'étape d'opération S4, lors de l'exécution de la trajectoire robotique T1 par le robot 2, des valeurs de paramètres inertiels sont mesurées à l'aide du dispositif de mesure inertielle 10 et des valeurs de données d'état du robot sont déterminées de façon usuelle. Les valeurs mesurées des paramètres inertiels et les valeurs déterminées des données d'état sont enregistrées dans la mémoire 12 (de préférence une mémoire tampon).

L'étape d'opération S4 comprend également les sous-étapes suivantes, pour réaliser des opérations de façon répétitive (par exemple à une fréquence inférieure à 100 Hz) :
- une sous-étape d'extraction S4A pour extraire de la mémoire 12 (tampon) les valeurs mesurées passées des paramètres inertiels et les valeurs déterminées passées des données d'état, sur une fenêtre temporelle passée. A titre d'exemple, à un instant t, la fenêtre temporelle passée peut être définie comme suit : [t-0,5s, t] ;
- une sous-étape de prédiction S4B pour prédire, à l'aide dudit modèle de prédiction, des valeurs futures des données d'état sur une fenêtre temporelle future, à partir de valeurs mesurées passées des paramètres inertiels et de valeurs déterminées passées des données d'état, qui ont été enregistrées dans la mémoire 12 (tampon) et ont été extraites à la sous-étape d'extraction S4A. A titre d'exemple, à un instant t, la fenêtre temporelle future peut être définie comme suit : [t, t+0,5s] ;
- une sous-étape de calcul S4C pour calculer, à partir des valeurs futures prédites des données d'état, la trajectoire cartésienne prédite que le robot 2 exécutera sur la fenêtre temporelle future ; et
- une sous-étape de calcul S4D pour calculer dans un référentiel de référence (de l'outil 3) lesdites erreurs cartésiennes (selon au moins un axe) de ladite trajectoire cartésienne prédite par rapport à la trajectoire lisse T2 donnée.

Les actionneurs 9 de l'outil 3 sont commandées, de façon répétitive, à la sous-étape de commande S4E pour compenser localement les erreurs cartésiennes (calculées à la sous-étape de calcul S4D), ce qui permet à l'outil 3 (et plus particulièrement au point TCP) de suivre avec une plus grande précision la trajectoire lisse T2.

Ce premier mode de réalisation qui, au cours de l'étape d'opération S4, prend en compte des données obtenues lors de l'exécution de la partie de trajectoire déjà exécutée durant cette étape d'opération S4, utilise donc des données réelles (c'est-à-dire représentatives de l'état réel du fonctionnement du robot), ce qui permet d'augmenter la précision de la compensation réalisée à l'aide des actionneurs 9 et ainsi la précision du suivi de la trajectoire lisse T2 par l'outil 3 .

Par ailleurs, dans un second mode de réalisation simplifié, la trajectoire cartésienne prédite est formée à la sous-étape de calcul S3B de l'étape de traitement de données S3.

Les erreurs cartésiennes (selon au moins un axe) de cette trajectoire cartésienne prédite, par rapport à la trajectoire lisse T2 donnée, sont ensuite calculées. Dans ce second mode de réalisation, ces erreurs cartésiennes sont calculées, de préférence, à l'étape de traitement de données S3, et elles sont utilisées à la sous-étape de commande S4E de l'étape d'opération S4 pour commander les actionneurs 9, de façon répétitive, afin de compenser localement ces erreurs cartésiennes. Dans une variante de réalisation, les erreurs cartésiennes peuvent également être calculées à l'étape d'opération S4.

Ce second mode de réalisation, pour lequel la trajectoire cartésienne a été calculée à l'étape de traitement de données S3, ne nécessite pas de réaliser des mesures inertielles à l'étape d'opération S4 et permet ainsi de simplifier la mise en œuvre de cette étape d'opération S4 et donc le procédé P.

Comme indiqué ci-dessus, les axes du robot 2 permettent des déplacements importants mais ils sont susceptibles de générer des erreurs de trajectoire, tandis que les axes de l'outil 3 présentent une portée réduite, mais une grande précision. Aussi, dans le procédé P :
- à l'étape d'acquisition de données S2, les axes de l'outil 3 sont bloqués ; et
- à l'étape d'opération S4, les axes de l'outil 3 sont pilotés pour compenser les erreurs des axes du robot 2.

Par ailleurs, le dispositif informatique 13 peut également comporter, comme représenté sur la figure 2 :
- au moins une mémoire 18 (MEM pour « Memory » en anglais) susceptible de stocker des données qui sont utilisées pour les traitements de données et calculs mis en œuvre par le dispositif informatique 13, telles que par exemple les valeurs mesurées des paramètres inertiels et les valeurs déterminées des données d'état ; et
- une interface homme/machine 19 (HMI pour « Human-Machine Interface » en anglais) permettant à un opérateur de fournir des données au dispositif informatique 1, telles que par exemple les valeurs mesurées des paramètres inertiels et les valeurs déterminées des données d'état.

De plus, l'unité de réception 15 et l'unité de transmission 17 peuvent faire partie d'un système de communication 20 usuel permettant au dispositif informatique 13 de communiquer avec des dispositifs externes audit dispositif informatique 13 et notamment avec l'unité de commande 7 du robot 2, par une liaison filaire ou non filaire. En outre, l'unité de calcul 16 du dispositif informatique 13 peut correspondre à tout type de processeur apte à mettre en œuvre les traitements et calculs correspondants.

Le système 1 utilise donc des mesures inertielles pour identifier en temps réel des imprécisions de trajectoire, de faibles amplitudes, puis il applique une commande à des actionneurs 9 de l'outil 3 pour minimiser l'effet de ces imprécisions et ainsi obtenir que l'outil 3 suive une trajectoire lisse avec plus de précision.

Le procédé P et le système 1, tels que décrits ci-dessus, permettent ainsi de compenser, de façon particulièrement efficace, des imprécisions de trajectoire répétables qui existent pour les outils des robots. Pour ce faire, la trajectoire suivie n'est pas modifiée (lors de l'étape d'opération S4 au cours de laquelle est réalisée la tâche attribuée à l'outil 3) mais la position de l'outil 3 est corrigée de manière à compenser des erreurs cartésiennes correspondant à ces imprécisions répétables.

Le procédé P et le système 1 permettent ainsi que la trajectoire lisse T2 (qui doit être suivie par l'outil 3 du robot 2) soit suivie avec une plus grande précision. Ainsi, en particulier, lorsque le procédé P et le système 1 sont utilisés pour une impression directe sur forme, ils permettent d'obtenir une meilleure qualité d'impression.

## Revendications

1. Procédé pour augmenter la précision du suivi d'une trajectoire lisse par un outil d'un robot,
**caractérisé en ce qu'**il comprend au moins la suite d'étapes suivantes :
- une étape d'acquisition de données (S2), mise en œuvre à l'aide du robot (2), pour faire exécuter au robot (2) une trajectoire dite robotique permettant à l'outil (3) en situation non opérationnelle de suivre une trajectoire lisse donnée, au cours de laquelle des valeurs de paramètres inertiels sont mesurées, à l'aide d'au moins un dispositif de mesure inertielle (10), et des valeurs de données d'état du robot sont déterminées, les valeurs mesurées des paramètres inertiels et les valeurs déterminées des données d'état étant enregistrées ;
- une étape de traitement de données (S3), mise en œuvre par un dispositif informatique (13), pour former, à partir des valeurs mesurées et enregistrées des paramètres inertiels et des valeurs déterminées et enregistrées des données d'état ainsi que de la trajectoire lisse donnée, un modèle de prédiction pour prédire des valeurs futures des données d'état du robot (2) ; et
- une étape d'opération (S4), mise en œuvre à l'aide du robot (2), pour faire exécuter au robot (2) ladite trajectoire robotique, cette étape d'opération (S4) comprenant une sous-étape de commande (S4E) pour, de façon répétitive, lors de l'exécution de la trajectoire robotique, commander des actionneurs (9) de l'outil (3) pour compenser des erreurs cartésiennes afin d'augmenter la précision du suivi par l'outil (3) en situation opérationnelle de ladite trajectoire lisse, lesdites erreurs cartésiennes étant déterminées à partir d'une trajectoire cartésienne prédite, obtenue à partir desdites valeurs futures des données d'état.

2. Procédé selon la revendication 1,
**caractérisé en ce qu'**au moins la trajectoire cartésienne prédite est formée à l'étape de traitement de données (S3).

3. Procédé selon la revendication 1,
**caractérisé en ce qu'**à l'étape d'opération (S4), lors de l'exécution de la trajectoire robotique par le robot (2), des valeurs de paramètres inertiels sont mesurées et des valeurs de données d'état du robot (2) sont déterminées, les valeurs mesurées des paramètres inertiels et les valeurs déterminées des données d'état étant enregistrées dans une mémoire (12), l'étape d'opération (S4) comprenant également au moins les sous-étapes suivantes, mises en œuvre de façon répétitive :
- une sous-étape de prédiction (S4B) pour prédire, à l'aide dudit modèle de prédiction, des valeurs futures des données d'état sur une fenêtre temporelle future, à partir de valeurs mesurées passées des paramètres inertiels et de valeurs déterminées passées des données d'état, qui sont enregistrées dans la mémoire (12) ;
- une première sous-étape de calcul (S4C) pour calculer, à partir des valeurs futures prédites des données d'état, la trajectoire cartésienne prédite que le robot (2) exécutera sur une fenêtre temporelle future ; et
- une seconde sous-étape de calcul (S4D) pour calculer dans un référentiel de référence de l'outil (3) lesdites erreurs cartésiennes de ladite trajectoire cartésienne prédite par rapport à la trajectoire lisse donnée, les actionneurs (9) de l'outil (3) étant commandées pour compenser ces erreurs cartésiennes.

4. Procédé selon la revendication 3,
**caractérisé en ce que** l'étape d'opération (S4) comprend une sous-étape d'extraction (S4A) pour extraire de la mémoire (12) les valeurs mesurées passées des paramètres inertiels et les valeurs déterminées passées des données d'état, qui seront utilisées dans la sous-étape de prédiction (S4B).

5. Procédé selon l'une quelconque des revendications précédentes, **caractérisé en ce que** le modèle de prédiction formée à l'étape de traitement de données (S3) se base sur l'un des éléments suivants : une régression, un réseau neuronal.

6. Procédé selon l'une quelconque des revendications précédentes, **caractérisé en ce que** les paramètres inertiels comprennent au moins certains des paramètres suivants : une ou des accélérations linéaires, une ou des vitesses angulaires.

7. Procédé selon l'une quelconque des revendications précédentes, **caractérisé en ce que** les données d'état comprennent au moins certaines des données suivantes du robot (2) : une ou des positions d'articulations (5), une ou des vitesses d'articulations (5), une ou des positions cartésiennes, une ou des vitesses cartésiennes.

8. Procédé selon l'une quelconque des revendications précédentes, **caractérisé en ce qu'**il comporte également une étape de programmation (S1) pour programmer le robot (2) afin qu'il exécute ladite trajectoire robotique pour que l'outil (3) suive la trajectoire lisse.

9. Système pour augmenter la précision du suivi d'une trajectoire lisse par un outil d'un robot à articulations multiples,
**caractérisé en ce qu'**il comporte au moins :
- ledit robot (2) qui est commandé pour exécuter une trajectoire dite robotique permettant à l'outil (3) de suivre une trajectoire lisse donnée, le robot (2) étant commandé pour exécuter la trajectoire robotique pour une situation non opérationnelle et pour une situation opérationnelle de l'outil (3) ;
- au moins un dispositif de mesure inertielle (10) configuré pour mesurer les valeurs de paramètres inertiels au cours de l'exécution de la trajectoire robotique par le robot (2), au moins pour une situation non opérationnelle de l'outil (3) ;
- au moins une mémoire (11, 12) configurée pour enregistrer les valeurs des paramètres inertiels, mesurées par le dispositif de mesure inertielle (10), et des valeurs déterminées de données d'état du robot (2) ;
- un dispositif informatique (13) configuré au moins pour former, à partir des valeurs mesurées et enregistrées des paramètres inertiels et des valeurs déterminées et enregistrées des données d'état ainsi que de la trajectoire lisse donnée, un modèle de prédiction pour prédire des valeurs futures des données d'état du robot (2) ; et
- des actionneurs (9) de l'outil (3) configurés pour compenser, au cours de l'exécution de la trajectoire robotique pour la situation opérationnelle de l'outil (3), des erreurs cartésiennes afin d'augmenter la précision du suivi par l'outil (3) de ladite trajectoire lisse, lesdites erreurs cartésiennes étant déterminées à partir d'une trajectoire cartésienne prédite, obtenue à partir desdites valeurs futures des données d'état.
